Europäisches Patentamt

European Patent Office

Office européen des brevets

(19)

(11) EP 0 562 164 B1

(12) EUROPÄISCHE PATENTSCHRIFT

(45) Veröffentlichungstag und Bekanntmachung des Hinweises auf die Patenterteilung:
13.08.1997 Patentblatt 1997/33

(51) Int. Cl.$^6$: B27K 3/50

(21) Anmeldenummer: 92119410.6

(22) Anmeldetag: 13.11.1992

(54) **Emulgatorfreies, wasserverdünnbares Konzentrat oder Mittel zum konservieren von Holz und Holzwerkstoffen**

Emulsifier-free water dilutable concentrate or agent for preserving wood and woody materials

Concentré ou agent sans émulsifiant diluable par l'eau, pour la préservation du bois et des matériaux en bois

(84) Benannte Vertragsstaaten:
AT BE CH DE DK ES FR GB GR IE IT LI LU MC NL PT SE

(30) Priorität: 27.03.1992 DE 4209939

(43) Veröffentlichungstag der Anmeldung:
29.09.1993 Patentblatt 1993/39

(73) Patentinhaber: DESOWAG GmbH
D-40476 Düsseldorf (DE)

(72) Erfinder: Goletz, Peter
W-4152 Kempen St.Hubert (DE)

(74) Vertreter: Sparing - Röhl - Henseler
Patentanwälte
Postfach 14 04 43
40074 Düsseldorf (DE)

(56) Entgegenhaltungen:
EP-A- 0 043 035        EP-A- 0 314 377
EP-A- 0 402 998        DE-A- 1 918 846
FR-A- 2 474 935        GB-A- 2 044 312
GB-A- 2 128 091

• DATABASE WPI, Week 8027, Derwent
  Publications Ltd., London, GB; AN 80-47166C

**Beschreibung**

Die vorliegende Erfindung betrifft ein emulgatorfreies, wasserverdünnbares Konzentrat oder Mittel zum Konservieren von Holz und Holzwerkstoffen, bestehend aus bestimmten Gewichtsmengen eines organisch-chemischen Lösungsmittels oder Lösungsmittelgemisches, eines in dem organisch-chemischen Lösungsmittel oder Lösungsmittelgemisch oder in einem Alkydharz löslichen Fungizides oder Fungizidgemisches, eines in dem organisch-chemischen Lösungsmittel oder Lösungsmittelgemisch oder in einem Alkydharz löslichen Insektizides oder Insektizidgemisches, eines wasserlöslichen Alkydharzes bestimmter Zusammensetzung sowie gegebenenfalls zusätzlich organischen Farbstoffen, anorganischen Pigmenten oder Trockenstoffen.

Aus EP-A-0 043 035 ist ein einphasiges Mittel zum Konservieren von Holz und Holzwerkstoffen auf Lösungsmittelbasis bekannt, das neben Fungiziden und Insektiziden ein niedrig viskoses Alkydharz eines bestimmten Typs, der eine ausreichende Eindringtiefe des Mittels gewährleistet, gelöst enthält.

Aus EP-A-0 314 377 ist ein Mittel zum Beschichten von Holzoberflächen bekannt, bei dem drei unterschiedliche Typen von Alkydharzen und neben Wasser ein organisches Lösungsmittel verwendet werden, um als Kopplungslösungsmittel ein Lösen des Alkydharzes in Wasser zu bewirken.

Aus FR-A-2 474 935 ist ein Holzschutzmittel für den Stammschutz, d.h. für frisch geschlagene und daher feuchte Hölzer, die auf Flüssen abtransportiert werden, bekannt, das eine Schutzschicht auf dem Holz ausbildet, um die Verdunstung von Wasser möglichst zu unterbinden und damit einer unerwünschten Rißbildung der Stämme entgegenzuwirken. Dementsprechend weist dieses Mittel einen sehr hohen Harzanteil auf.

Es sind bereits wasserverdünnbare Holzschutzmittel bekannt, die neben den bioziden Wirkstoffen und Lösungsmitteln wasserverdünnbare Alkydharze sowie nicht-ionogene Emulgatoren enthalten, siehe DE-C-3130675 und DE-C-3004319.

Infolge der Anwesenheit von emulgierten, polymeren Alkydharzteilchen im Holzschutzmittel dringt letzteres nicht ausreichend tief in das Holz ein; auch wird hierdurch die Trocknungsdauer des Holzschutzmittels verlängert.

Die Aufgabe der vorliegenden Erfindung besteht daher darin, ein wasserverdünnbares Konzentrat oder Mittel zum Konservieren von Holz und Holzwerkstoffen zur Verfügung zu stellen, das diese Nachteile nicht aufweist. Es sollte darüber hinaus verfestigend auf die Holzoberfläche wirken, über längere Zeit lagerstabil sein und das Konzentrat durch einfache Wasserzugabe ohne Zuhilfenahme von Intensivrührern oder dergleichen auf die anwendungsfertige Konzentration verdünnbar sein.

Gegenstand der Erfindung ist daher ein emulgatorfreies, wasserverdünnbares Konzentrat oder Mittel zum Konservieren von Holz und Holzwerkstoffen, bestehend aus:

a) 0 bis 15 Gew.-Teilen, vorzugsweise
   0,5 bis 10 Gew.-Teilen
eines organisch-chemischen Lösungsmittels oder Lösungsmittelgemisches,

b) 0,2 bis 20 Gew.-Teilen, vorzugsweise
   0,4 bis 15 Gew.-Teilen
eines in dem organisch-chemischen Lösungsmittel oder Lösungsmittelgemisch oder in einem Alkydharz löslichen Fungizides oder Fungizidgemisches,

c) 0,02 bis 4,0 Gew.-Teilen, vorzugsweise
   0,05 bis 3,0 Gew.-Teilen
eines in dem organisch-chemischen Lösungsmittel oder Lösungsmittelgemisch oder in einem Alkydharz löslichen Insektizides oder Insektizidgemisches,

d) 10 bis 95 Gew.-Teilen, vorzugsweise
   30 bis 70 Gew.-Teilen
eines wasserlöslichen Alkydharzes (berechnet als Feststoff) auf der Basis eines linolensäuremodifizierten Polyesters mit 5 bis 100 Ethylenoxideinheiten sowie gegebenenfalls zusätzlich organischen Farbstoffen, organischen oder anorganischen Pigmenten oder Trockenstoffen.

Das als Komponente d) erfindungsgemäß eingesetzte, wasserlösliche Alkydharz ist aus der PCT-Patentanmeldung WO-91/065586 bereits bekannt. Es findet jedoch gemäß den Angaben in dieser Literaturstelle ausschließlich als Dispergierhilfsmittel für wasserunlösliche Pigmente in wässrigen, glanzbildenden Anstrichmittelformulierungen Verwendung.

Erfindungsgemäß wurde überraschend festgestellt, daß durch den Einsatz dieses wasserlöslichen Alkydharzes, insbesondere auf der Basis eines linolensäuremodifizierten Polyesters, das erfindungsgemäße emulgatorfreie wasserverdünnbare Konzentrat oder Mittel ein sehr gutes Eindringvermögen in das Holz aufweist, wobei nach dem Auftrag des anwendungsfertigen Mittels der gebildete Überzug schneller trocknet als übliche wasserverdünnbare, Emulgator und/oder Alkydharz enthaltende Holzschutzmittel. Darüber hinaus wirkt das erfindungsgemäße Konzentrat oder Mittel verfestigend auf das Holz; die fungiziden und insektiziden Wirkstoffe bleiben im wasserlöslichen Alkydharz gelöst und damit im Holz fixiert und werden durch Feuchtigkeitseinwirkung nicht ausgewaschen. Das Konzentrat bleibt über lange Zeit stabil und läßt sich ohne Zuhilfenahme von Intensivrührern oder dergleichen bei der Verdünnung mit Wasser durch einfaches Rühren auf die anwendungsfertige Konzentration bringen.

Als organisch-chemisches Lösungsmittel wird ein unpolares oder polares organisch-chemisches Lösungsmittel oder Lösungsmittelgemisch verwendet. Vorzugsweise findet ein organisch-chemisches schwerflüchtiges, öliges oder mineralölhaltiges Lösungsmittel oder Lösungsmittelgemisch mit einer Verdunstungszahl über 35 und einem Flammpunkt oberhalb 30°C Verwendung. Beispiele für derartige Lösungsmittel sind entsprechende Mineralöle, mineralölhaltige Lösungsmittelgemische, Testbenzin oder Alkylbenzole.

Als erfindungsgemäß in dem beanspruchten Konzentrat oder Mittel besonders geeignete Fungizide werden 1-[[2-(2,4-Dichlorphenyl]-4-propyl-1,3-dioxolan-2-yl]-methyl]-1H-1,2,4-triazol (common name: Propiconazol), $\alpha$[(2-(4-chlorphenyl)ethyl]-$\alpha$[1,1-dimethylethyl]-1H-1,2,4-triazol-1-ethanol (common name: Tebuconazol), 1-[[2-(2,4-dichlorphenyl)-1,3-dioxolan-2-yl]methyl]-1H-1,2,4-triazol (common name: Azaconazol),3-Jod-2-propinyl-butylcarbamat und/oder Methyl-benzimidazol-2-yl-carbamat (common name: Carbendazin) verwendet.

Als erfindungsgemäß in dem beanspruchten Konzentrat oder Mittel besonders geeignete Insektizide werden 3-Phenoxybenzyl($\pm$)-cis-trans-3-(2,2-dichlorvinyl)-2,2 dimethylcyclopropancarboxylat (common name: Permethrin), 2,2-Dimethyl-3-(2,2-dichlorvinyl)-cyclopropancarbonsäure-$\alpha$-cyano-3-phenoxybenzylester (common name: Cypermethrin), Cyano-(4-fluoro-3-phenoxyphenylmethyl-3-(2,2-dichlor-ethenyl)-2,2-dimethylcyclopropancarboxylat (common name: Cyfluthrin), Dimethyl- (4-ethoxyphenyl)silylmethyl-3-phenoxybenzylester, Dimethyl (4-ethoxyphenyl)-silymethyl-2-phenoxy-6-pyridylmethylether und/oder 1-[4-(2-chlor-$\alpha,\alpha,\alpha$,trifluor-p-tolyloxy)-2-fluorphenyl]-3-(2,6,-difluorbenzoyl) harnstoff (common name: Flufenoxuron) verwendet.

Gemäß einer besonderen Ausführungsform enthält das erfindungsgemäße Konzentrat oder Mittel 0 bis 5,0 Gewichtsteile eines 2,2,4-Trimethyl-1,3-pentadiolmonoisobutyrats.

Das erfindungsgemäße Mittel (anwendungsfertige Mittel) wird durch Verdünnen von 1 Gewichtsteil des wasserfreien Konzentrats mit 2 bis 9 Gewichtsteilen, vorzugsweise 3 bis 8 Gewichtsteilen Wasser unter einfachem Umrühren, ohne Zuhilfenahme von Schnellrührern und Dissolvern, erhalten.

Beispiele

I Erfindungsgemäßes emulgatorfreies, wasserverdünnbares Konzentrat zur Herstellung eines Konservierungsmittels für Holz:

| Alkydharz, wasserlöslich (linolensäuremodifizierter Polyester), | |
| --- | --- |
| Handelsbezeichung URAD 2257 DD | 77,5 Gew.-T. |
| Propiconazol (Fungizid) | 10,0 Gew.-T. |
| Permethrin (Insektizid) | 0,5 Gew.-T. |
| Lösungsmittelgemisch aus Aromaten und Aliphaten, | |
| Handelsbezeichnung SHELLSOL AB | 10,0 Gew.-T. |
| Zink-Sikkativ | 1,0 Gew.-T. |
| Cer-Sikkativ | 0,5 Gew.-T. |
| Co-Sikkativ | 0,5 Gew.-T. |
| | 100,0 Gew.-T. |

II Erfindungsgemäßes emulgatorfreies, anwendungsfertiges Mittel:

a) 1 Gew.-Teil Konzentrat gemäß I + 9 Gew.-Teile Wasser
b) 1 Gew.-Teil Konzentrat gemäß I + 5 Gew.-Teile Wasser

EP 0 562 164 B1

Trocknung:

IIa:  2 bis 3 Stunden nach Auftrag
IIb:  2 bis 3 Stunden nach Auftrag

Handelsübliches, emulgatorhaltiges, wasserverdünnbares anwendungsfertiges Holzschutzmittel:
über 10 Stunden nach Auftrag

Eindrinatiefe: (in Kiefernholz)

IIa:  über 3 mm
IIb:  über 3 mm

Handelsübliches, emulgatorhaltiges, wasserverdünnbares anwendungsfertiges Holzschutzmittel:
1 bis 3 mm

**Patentansprüche**

1. Emulgatorfreies, wasserverdünnbares Konzentrat oder Mittel zum Konservieren von Holz und Holzwerkstoffen, bestehend aus

a) 0 bis 15 Gew.teilen, vorzugsweise
0,5 bis 10 Gew.teilen
eines organisch-chemischen Lösungsmittels oder Lösungsmittelgemisches,
b) 0,2 bis 20 Gew.teilen, vorzugsweise
0,4 bis 15 Gew.teilen
eines in dem organisch-chemischen Lösungsmittel oder Lösungsmittelgemisch oder in einem Alkydharz löslichen Fungizides oder Fungizidgemisches,
c) 0,02 bis 4,0 Gew.teilen, vorzugsweise
0,05 bis 3,0 Gew.teilen
eines in dem organisch-chemischen Lösungsmittel oder Lösungsmittelgemisch oder in einem Alkydharz löslichen Insektizides oder Insektizidgemisches,
d) 10 bis 95 Gew.teilen, vorzugsweise
30 bis 70 Gew.teilen
eines wasserlöslichen Alkydharzes (berechnet als Feststoff) auf der Basis eines linolensäuremodifizierten Polyesters mit 5 bis 100 Ethylenoxideinheiten sowie gegebenenfalls zusätzlich organischen Farbstoffen, organischen oder anorganischen Pigmenten oder Trockenstoffen.

2. Konzentrat oder Mittel nach Anspruch 1, dadurch gekennzeichnet, daß das organisch-chemische Lösungsmittel ein unpolares oder polares organisch-chemisches Lösungsmittel oder Lösungsmittelgemisch, vorzugsweise ein organisch-chemisches schwerflüchtiges, öliges Lösungsmittel oder Lösungsmittelgemisch ist.

3. Konzentrat oder Mittel nach Anspruch 1 oder 2, dadurch gekennzeichnet, daß das Fungizid aus 1-[[2-(2,4-Dichlorphenyl]-4-propyl-1,3-dioxolan-2-yl]-methyl]-1H-1,2,4-triazol,α[(2-(4-chlorphenyl)ethyl]-α[1,1-dimethylethyl]-1H-4-1,2,4-triazol-1-ethanol, 1-[[2-(2,4-dichlorphenyl)-1,3-dioxolan-2-yl]methyl]-1H-1,2,4-triazol, 3-Jod-2-propinyl-butylcarbamat und/oder Methyl-benzimidazol-2-yl-carbamat besteht.

4. Konzentrat oder Mittel nach Anspruch 1 oder 2, dadurch gekennzeichnet, daß das Insektizid aus 3-Phenoxybenzyl(±)-cis-trans-3-(2,2-dichlorvinyl)-2,2-dimethylcyclopropan-carboxylat, 2,2-Dimethyl-3-(2,2-dichlorvinyl)-cyclopropancarbonsäure-α-cyano-3-phenoxybenzylester, Cyano-(4-fluoro-3-phenoxyphenyl-methyl-3-(2,2-dichlorethenyl)-2,2-dimethyl cyclopropancarboxylat, Dimethyl(4-ethoxyphenyl)silylmethyl-3-phenoxy-benzylester, Dimethyl(4-ethoxyphenyl)-silylmethyl-2-phenoxy-6-pyridylmethylether und/oder 1-[4-(2-chlor-α,α,α,trifluor-p-tolyloxy)-2-fluorphenyl]-3-(2,6,-difluor-benzoyl)harnstoff besteht.

5. Konzentrat oder Mittel nach einem oder mehreren der Ansprüche 1 bis 4, dadurch gekennzeichnet, daß es

e) 0 bis 5,0 Gew.-teile,
2,2,4-Trimethyl-1,3-pentadiol-monoisobutyrat

4

EP 0 562 164 B1

enthält.

6. Mittel (anwendungsfertiges Mittel) nach einem oder mehreren der Ansprüche 1 bis 5, dadurch gekennzeichnet, daß es aus

1 Gewichtsteil des wasserfreien Konzentrats oder Mittels gemäß einem oder mehreren der Ansprüche 1 bis 5 und
2 bis 9 Gew.teilen, vorzugsweise
3 bis 8 Gew.teilen
Wasser,

besteht.

Claims

1. Non-emulsifier, water-dilutable concentrate or timber and timber materials preservative, consisting of

a) 0 to 15 weight-%, preferably
0.5 to 10 weight-%
of an organic-chemical solvent or solvent mix.

b) 0.2 to 20 weight-%, preferably
0.4 to 15 weight-%
of an organic-chemical solvent or solvent mix or an alkyde-soluable fungicide or fungicide mix,

c) 0.02 to 4.0 weight-%, preferably
0.05 to 3.0 weight-%
of an organic-chemical solvent or solvent mix or alkyde-soluable insecticide or insecticide mix,

d) 10 to 95 weight-%, preferably
30 to 70 weight-%
of a water-soluable alkyde (calculated as a solid substance) based on a linolenic-modified polyester of 5 to 100 ethylen oxide units and possibly additional organic dies, organic and inorganic pigments or dry substances.

2. A concentrate or agent according to Claim 1, characterized in that the organic-chemical solvent is a non-polar or polar organic-chemical solvent or solvent mix, preferably an organic-chemical, heavy, oily solvent or solvent mix.

3. A concentrate or agent according to Claims 1 or 2, characterized in that the fungicide consists of 1-[[2-(2.4 dichlorophenyl]-4-propyl-1, 3-dioxolan-2-yl]-methyl]-1H-1,2,4-triazol,$\alpha$[(2-(4-chlorphenyl]ethyl]-$\alpha$[1,1-dimethylethyl]-1H-4-1,2,4-triazol-1-ethanol, 1-[[2-(2,4-dichlorophenyl)-1,3-dioxolan-2-yl]methyl]-1H-1,2,4-triazol, 3-iodine-2-propinyl-butylcarbamate and/or methyl-benzimidazol-2-yl-carbamate.

4. A concentrate or agent according to Claims 1 or 2, characterized in that the insecticide consists of 3-phenoxy benzyl($\pm$)-cis-trans-3-(2,2-dichlorovinyl)-2,2-dimethyl cyclopropane-carboxylate, 2,2-dimethyl-3-(2,2-diochlorovinyl)-cyclopropane carbolic acid-$\alpha$-cyano-3-phenoxybenzyl ester, cyano-(4-fluoro-3-phenoxy-phenylmethyl-3-(2,2-dichloro-ethenyl)-2,2-dimethyl-cyclo propane carboxylate, dimethyl(4-ethoxyphenyl)-silylmethyl-3-phenoxy-benzylester, dimethyl(4-ethoxyphenyl)-silylmethyl-2-phenoxy-6-pyridyl methy-ether and/or 1-(4-(2-chloro-$\alpha$,$\alpha$,$\alpha$,trifluoro-p-tolyloxy)-2-fluorophenyl]-3-(2,6,-difluoro-benzoyl)urea.

5. A concentrate or agent according to one or several of Claims 1 to 4, characterized in that it contains

e) 0 to 5.0 weight-%,

2,2,4-trimethyl-1,3-pentadiol-monoisobutyrate.

6. An agent (ready for application) according to one or several of Claims 1 to 5, characterized in that it consists of

1 weight-% of a non-aqueous concentrate or agent according to one or several of Claims 1 to 5 and

5

EP 0 562 164 B1

2 to 9 weight-%, preferably
3 to 8 weight-%
of water.

**Revendications**

1. Concentré ou produit pour la conservation du bois et des matériaux à base de bois, sans émulsifiant et diluable à l'eau, constitué de :

    a) 0 à 15 parties en poids, de préférence de 0,5 à 10 parties en poids, d'un solvant ou d'un mélange de solvants organique,
    b) 0,2 à 20 parties en poids et de préférence de 0,4 à 15 parties en poids d'un fongicide ou d'un mélange de fongicides soluble dans le solvant ou le mélange de solvants organique ou dans une résine alkyde,
    c) 0,02 à 4,0 parties en poids et de préférence de 0,05 à 3,0 parties en poids d'un insecticide ou d'un mélange d'insecicides soluble dans le solvant ou le mélange de solvants organique ou dans une résine alkyde,
    d) 10 à 95 parties en poids et de préférence de 30 à 70 parties en poids d'une résine alkyde soluble dans l'eau (calculée sur l'extrait sec), à base d'un polyester, modifié par l'acide linolénique, comportant de 5 à 100 motifs oxyde d'éthylène, et éventuellement en outre de colorants organiques, de pigments organiques ou minéraux, ou de matières sèches.

2. Concentré ou produit selon la revendication 1, caractérisé en ce que le solvant organique est un solvant ou un mélange de solvants organique, polaire ou apolaire, de préférence un solvant ou un mélange de solvants organique, huileux, peu volatil.

3. Concentré ou produit selon la revendication 1 ou 2, caractérisé en ce que le fongicide est constitué de 1-[[2-(2,4-dichlorophényl]-4-propyl-1,3-dioxolanne-2-yl]méthyl]-1H-1,2,4-triazole, de α[(2-(4-chlorophényl)-éthyl]-α[1,1-diméthyléthyl]-1H-4-1,2,4-triazole-1-éthanol, de 1-[[2-(2,4-dichlorophényl)-1,3-dioxolanne-2-yl]méthyl]-1H-1,2,4-triazole, de butylcarbamate de 3-iodo-2-propynyle et/ou de benzymidazole-2-yl-carbamate de méthyle.

4. Concentré ou produit selon la revendication 1 ou 2, caractérisé en ce que l'insecticide est constitué de (±)-cis-trans-3-(2,2-dichlorovinyl)-2,2-diméthylcyclopropane-carboxylate de 3-phénoxybenzyle, de l'ester α-cyano-3-phénoxybenzylique de l'acide 2,2-diméthyl-3-(2,2-dichlorovinyl)-cyclopropanecarboxylique, de 3-(2,2-dichloroéthényl)-2,2-diméthylcyclo-propane-carboxylate de cyano-(4-fluoro-3-phénoxyphényl)-méthyle, d'un ester diméthyl(4-éthoxyphényl)-silylméthyl-3-phénoxybenzylique, d'oxyde de diméthyl(4-éthoxyphényl)-silylméthyl-2-phénoxy-6-pvridylméthyle et/ou de 1-[4-(2-chloro-α,α,α,trifluoro-p-tolyloxy)-2-fluorophényl]-3 (2,6-difluoro-benzoyl)urée.

5. Concentré ou produit selon l'une ou plusieurs des revendications 1 à 4, caractérisé en ce qu'il contient :

    e) 0 à 5,0 parties en poids de monoisobutyrate de 2,2,4-triméthyl-1,3-pentanediol.

6. Produit (produit prêt à l'emploi) selon l'une ou plusieurs des revendications 1 à 5, caractérisé en ce qu'il est constitué de:

    1 partie en poids du concentré ou produit anhydre selon l'une ou plusieurs des revendications 1 à 5, et
    2 à 9 parties en poids, de préférence de 3 à 8 parties en poids d'eau.

6